# EUROPÄISCHE PATENTSCHRIFT

(11) **EP 0 912 116 B1**
(45) Veröffentlichungstag und Bekanntmachung des Hinweises auf die Patenterteilung: **19.06.2002**
(21) Anmeldenummer: 97902088.0
(22) Anmeldetag: 04.02.1997
(51) Int. Cl.: A41D 27/08, G02B 5/126

(54) **VERZIERUNG FÜR EIN KLEIDUNGSSTÜCK**
DECORATIVE DEVICE FOR AN ARTICLE OF CLOTHING
PARURE POUR VETEMENT

(30) Priorität: 03.05.1996 AT 79496
(43) Veröffentlichungstag der Anmeldung: 06.05.1999
(73) Patentinhaber: D. Swarovski & Co., A-6112 Wattens/Tirol (AT)
(72) Erfinder: SWAROVSKI, Helmut, A-6122 Fritzens (AT)
(74) Vertreter: Hofinger, Engelbert, Dr.Dr.
(86) Internationale Anmeldenummer: AT9700019
(87) Internationale Veröffentlichungsnummer: WO9741746

(56) Entgegenhaltungen:
- EP-A- 0 693 697
- GB-A- 2 085 211
- US-A- 1 903 385
- US-A- 4 889 409
- US-A- 5 232 752
- US-A- 5 468 540

## Beschreibung

Die Erfindung bezieht sich auf eine Verzierung für ein Kleidungsstück, bestehend aus einzelnen Elementen aus Glas oder Kunststoff, deren Rückseite mit einem durch eine ebene Klebefläche begrenzten Kleber versehen ist.

Derartige Elemente werden mit verschiedenen Oberflächenkonfigurationen, Farben und Materialien hergestellt. Die Aufbringung erfolgt üblicherweise, indem die Elemente, die mit ihren Vorderseiten an einer Klebefolie befestigt sind, mit der Klebefläche nach oben auf eine Bügelunterlage gelegt werden und unter dem Einfluß von Druck und Temperatur mit dem Kleidungsstück dauerhaft verbunden werden. Es ist dabei kritisch, daß sich keines der zusammen ein Muster bildenden Elemente vom Kleidungsstück ablöst, da die Unterbrechung eines regelmäßigen Musters sofort unangenehm auffällt und den dekorativen Effekt zunichte macht.

Eine weitere Verzierung der eingangs genannten Art ist beispielsweise aus der US 5,232,752 bekannt. Dort wird das auf dem Kleidungsstück anzubringende Zierelement auf eine beispielsweise runde Unterlage geklebt, die dann ihrerseits mittels Klebstoff auf dem Kleidungsstück befestigt wird.

Um die verläßliche direkte Haftung einzelner Elemente auf einem aus Textil, Leder oder Kunststoff bestehenden Substrat zu gewährleisten, hat man sich bisher bemüht (vgl. GB 1 325 293 A), die dekorativen Elemente möglichst flach zu gestalten, damit von außen einwirkende Kräfte, wie sie insbesondere bei einem Waschvorgang unvermeidlich sind, nur ein geringes Moment in der Klebefläche erzeugen. Aus diesem Grunde war es nicht naheliegend, die Elemente in der Form von Retroreflektoren für die Verzierung von Kleidungsstücken zu verwenden, ganz abgesehen davon, daß übliche reflektierende Folien unansehnlich und nicht als Verzierung geeignet sind.

Aus der EP 693 697 A ist eine retroreflektierende Beschichtung bekannt. Glasperlen, die auf einer temporären Trägerschicht aufgebracht sind, werden mit einem Metallfilm bedampft und unter anderem auch auf ein Kleidungsstück aufgebracht. Anschließend wird die vorderseitige temporäre Trägerschicht entfernt. Durch die Rückstrahlung einfallenden Lichtes wird die Sichtbarkeit bei schlechten Sichtverhältnissen wesentlich verbessert, allerdings stellen diese retroreflektierenden Folien keine Verzierung dar.

Nach der Erfindung ist vorgesehen, daß jedes einzelne Element der Verzierung einen Retroreflektor umfaßt, dessen Vorderseite von einer durchsichtigen, konvexen, insbesondere sphärischen Eintrittsfläche begrenzt ist, wogegen die mit reflektierendem Material belegte, gekrümmte Rückseite im wesentlichen in der Brennfläche einfallenden Lichtes verläuft. Diese Bedingung ist bei üblichen Werten des Brechungsindex nur bei Elementen erfüllt, deren Höhe größer ist als ihr Durchmesser. Schon bei Elementen mit Kugelgestalt ist nur noch bei Materialien mit ganz bestimmtem Brechungsindex einigermaßen die Bedingung zu erfüllen, daß die auf der durchsichtigen Vorderseite gesammelten Strahlen auf die reflektierende Rückseite fokussiert werden.

Die absolute Höhe solcher Elemente ist nach oben dadurch begrenzt, daß zu weit über die Oberfläche der Kleidungsstücke vorspringende Teilchen relativ leicht abgerissen werden. Bei Höhen unter 1 mm lassen sich andererseits die retroreflektierenden Eigenschaften nur mehr schwer in reproduzierbarer Weise herstellen. Bevorzugt ist daher vorgesehen, daß die Höhe des Elementes senkrecht zur Klebfläche 1 - 5 mm, vorzugsweise 1 - 3 mm, beträgt.

Die Haftungssicherheit der erfindungsgemäßen Verzierung mit einer runden Klebefläche läßt sich dadurch erhöhen, daß der Durchmesser der Klebefläche größer ist als der Durchmesser der Eintrittsfläche. Dies wird einerseits dadurch erreicht, daß die reflektierende Rückseite des Retroreflektors einen größeren Durchmesser aufweist als die Eintrittsfläche, andererseits dadurch, daß die Elemente einen den Retroreflektor umgebenden Kragen aufweisen. Aufgrund dieser Maßnahme ist es ohne Schwierigkeiten möglich, klassische Retroreflektoren zu verwenden, deren Höhe größer ist als ihr größter Durchmesser. Der vorgesehene, den Retroreflektor umgebende Kragen kann mit schräg geneigten ebenen Facetten versehen werden. Die Abschrägung der Außenseite verringert dabei die Abreißgefahr. Die Facetten andererseits betonen den dekorativen Charakter der Elemente und lassen deren technische Funktion optisch weniger auffallen.

Durch die Erfindung wird den bekannten dekorativen Glasmustem eine Sicherheitsfunktion verliehen, da der Träger des - Kleidungsstückes für den Lenker eines beleuchteten Fahrzeuges in dunkler Umgebung auffallend sichtbar wird, was das Unfallsrisiko vermindert. Auch der dekorative Effekt der Verzierung wird unter Umständen durch die eingebauten Retroreflektoren erhöht, wenn der Träger des Kleidungsstückes in dunkler Umgebung, beispielsweise in einem Tanzlokal, durch eine Lichtquelle angestrahlt wird.

Weitere Einzelheiten der Erfindung werden anschließend anhand der Zeichnung besprochen.

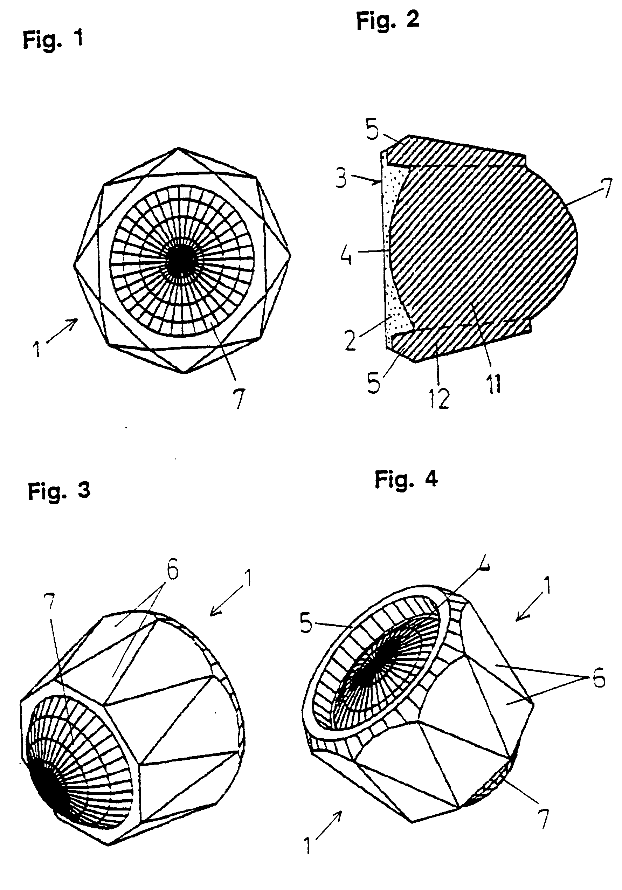

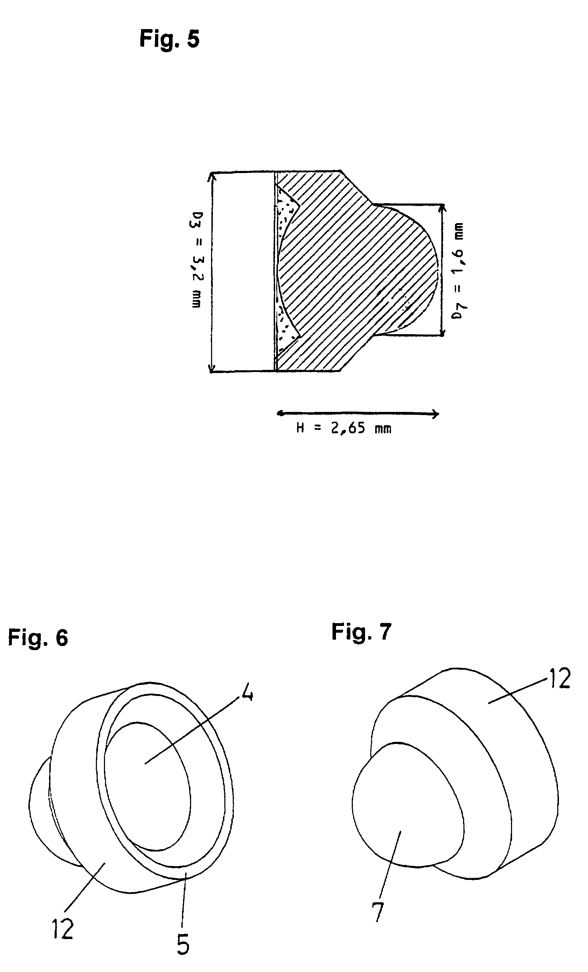

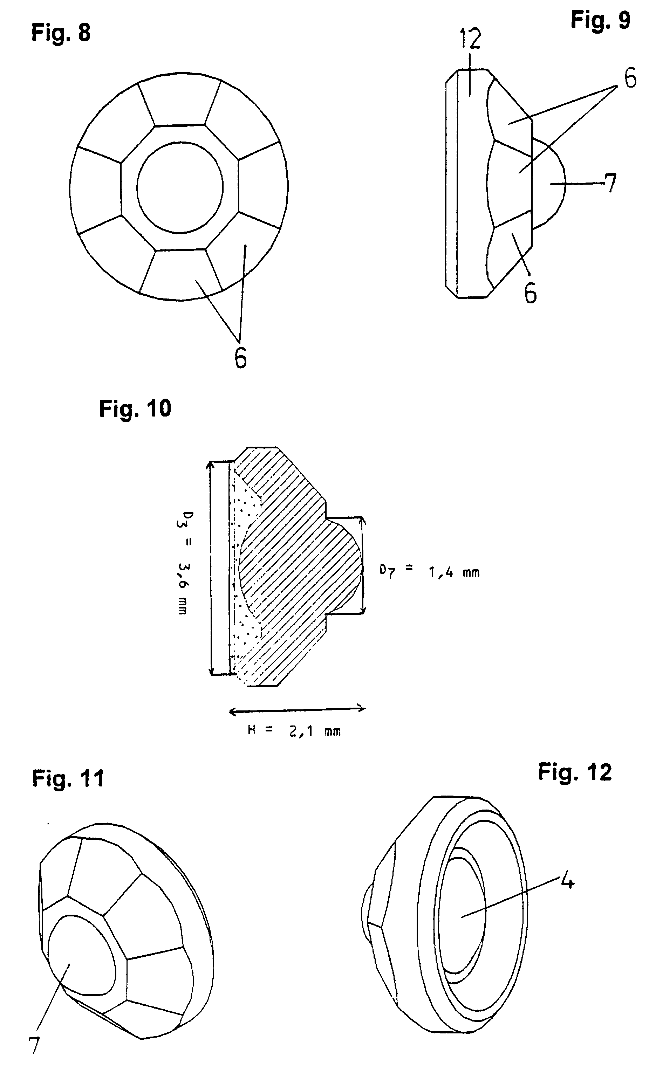

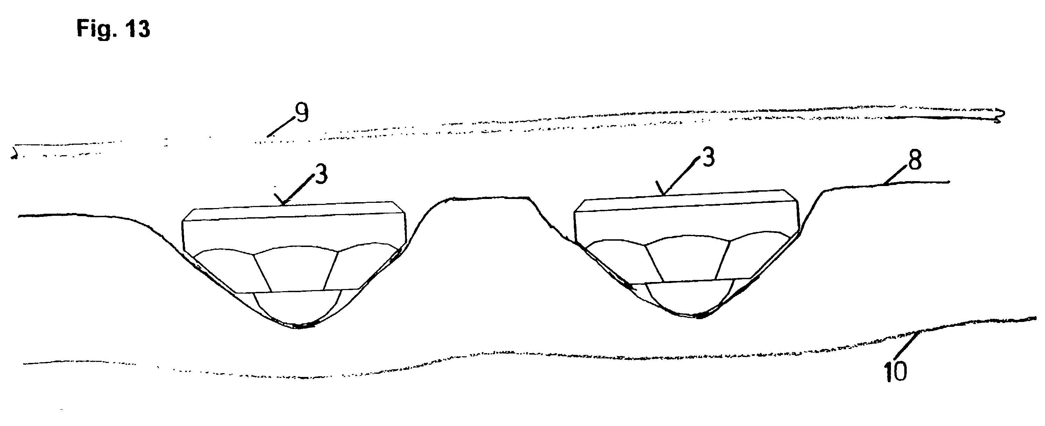

Fig. 1 - 4 stellen ein retroreflektierendes Element in Draufsicht, im vertikalen Schnitt sowie schaubildlich von schräg oben und von schräg unten dar. Fig. 5 - 7 zeigen ein zweites Ausführungsbeispiel im vertikalen Schnitt sowie schaubildlich von schräg unten und schräg oben, Fig. 8 - 12 ein drittes Ausführungsbeispiel von oben, von der Seite, im vertikalen Schnitt und von schräg oben bzw. von schräg unten, Fig. 13 illustriert die Aufbringung der erfindungsgemäßen Elemente in einer schematischen Seitenansicht.

Das in Fig. 1 - 4 dargestellte Element 1 besteht vorzugsweise aus Glas, kann jedoch auch aus Kunststoff gefertigt sein. Das Element 1 besteht aus einem Retroreflektor 11 mit Eintrittsfläche 7 und spiegelnder Rückseite 4. Dieser Retroreflektor ist an seinem Umfang von einem Kragen 12 umgeben. Auf die Eintrittsfläche 7 des Retroreflektors 11 auffallendes Licht wird je nach Einfallswinkel auf verschiedene Stellen der mit einem reflektierenden Überzug versehenen sphärischen Rückseite 4 des Retroreflektors 11 fokussiert. Die gekrümmte Rückseite 4 ist vom Rand 5 des Kragens 12 umgeben. Auf diesem Rand und auf der Rückseite 4 des Retroreflektors 11 ist ein Kleber 2, insbesondere ein Schmelzkleber, angeordnet, welcher eine ebene Klebefläche 3 definiert. Die Seitenwände des Elementes 1 können mit Facetten 6 versehen sein. In Fig. 4 ist der Kleber 2 weggelassen, damit der Verlauf der Rückseite 4 innerhalb des Randes 5 besser sichtbar wird.

Beim Ausführungsbeispiel nach Fig. 5 ist ein relativ breiter Kragen 12 vorgesehen, was sicherstellt, daß der Durchmesser D3 der Klebefläche 3 wesentlich größer ist als der Durchmesser D7 der Eintrittsfläche 7 des Retroreflektors 11. Die relativ große Höhe des Kragens 12 zusammen mit seinem schrägen Ansatz im Retroreflektor 11 verhindert ein Abbrechen des Kragens und ein Ablösen des Elementes 1.

Das Ausführungsbeispiel nach Fig. 8 - 12 unterscheidet sich von jenem nach Fig. 5 - 7 durch die noch flachere Bauweise, also durch ein Verhältnis von Höhe H zu Durchmesser D3 der Klebefläche, wie es auch bei herkömmlichen aufgebügelten Schmucksteinen üblich ist. Dies wird dadurch erreicht, daß der Kragen 12, welcher den Retroreflektor 11 umgibt, relativ breit ist. Damit dieser Bereich für den dekorativen Effekt des Elementes 1 nicht verloren geht, ist er mit ebenen Facetten 6 versehen.

Die Verspiegelung der Rückseite 4 des Retroreflektors 11 erfolgt vorzugsweise durch Bedampfen, da in diesem Fall der erhitzte Kleber 2 nicht imstande ist, die Verspiegelung beim Aufbügeln der Elemente 1 zu zerstören.

Das Aufbringen der erfindungsgemäßen Elemente 1 erfolgt im an sich bekannten Transferverfahren, welches in Fig. 13 schematisch dargestellt ist. Dabei werden die Steine mit ihrer Vorderseite an einer Klebefolie befestigt, welche im Bereich zwischen den Steinen in derselben Ebene verläuft wie die Klebeflächen 3 der Elemente 1. Nach Abziehen einer beim Transport die Klebeflächen 3 abdeckenden Schutzfolie, welche in Fig. 13 nicht dargestellt ist, wird die Folie 8, welche lose am Kleidungsstück haftet, auf eine Bügelunterlage 10 gelegt und durch Bügeln des Kleidungsstückes 9 die Verbindung zu den Elementen 1 hergestellt. Schließlich wird die Folie 8 abgezogen.

Das auf die beschriebene Weise hergestellte Kleidungsstück wirkt nicht nur dekorativ, es ist vielmehr auch sichergestellt, daß auch bei stark schrägem Einfall von Licht auf die im Kleidungsstück befestigten Retroreflektoren eine starke Rückstrahlung in Richtung der Lichtquelle stattfindet.

## Patentansprüche

1. Verzierung für ein Kleidungsstück, bestehend aus einzelnen Elementen (1) aus Glas oder Kunststoff, deren Rückseite mit einem durch eine ebene Klebefläche (3) begrenzten Kleber (2) versehen ist, **dadurch gekennzeichnet, daß** jedes Element (1) einen Retroreflektor (11) umfaßt, dessen Vorderseite von einer durchsichtigen, konvexen, insbesondere sphärischen Eintrittsfläche (7) begrenzt ist, wogegen die mit reflektierendem Material belegte, gekrümmte Rückseite (4) im wesentlichen in der Brennfläche einfallenden Lichtes verläuft.

2. Verzierung nach Anspruch 1, **dadurch gekennzeichnet, daß** die Höhe (H) des Elementes (1) senkrecht zur Klebefläche (3) 1 - 5 mm, vorzugsweise 1 - 3 mm, beträgt.

3. Verzierung nach Anspruch 1 oder 2 mit einer runden Klebefläche, **dadurch gekennzeichnet, daß** der Durchmesser (D3) der Klebefläche (3) größer ist als der Durchmesser (D7) der Eintrittsfläche (7).

4. Verzierung nach einem der Ansprüche 1 - 3, **dadurch gekennzeichnet, daß** die Elemente (1) einen den Retroreflektor (11) umgebenden Kragen (12) aufweisen.

5. Verzierung nach Anspruch 4, **dadurch gekennzeichnet, daß** der Durchmesser (D3) der Klebefläche (3) größer ist als die Höhe (H) des Elementes (1), und daß die Höhe (H) des Elementes (1) größer ist als der Durchmesser (D7) der Eintrittsfläche (7).

6. Verzierung nach Anspruch 4, **dadurch gekennzeichnet, daß** der Kragen (12) schräg geneigte ebene Facetten (6) aufweist.

7. Verzierung nach einem der Ansprüche 1 - 6, **dadurch gekennzeichnet, daß** die Rückseite (4) des Retroreflektors (11) durch Verdampfen verspiegelt ist.

8. Verzierung nach einem der Ansprüche 1 - 7, **dadurch gekennzeichnet, daß** die Elemente (1) mit ihren Vorderseiten an einer davon abziehbaren Klebefolie (8) befestigt sind, und an den Rückseiten mit einem unter Einfluß von Druck und Wärme schmelzenden Kleber (2) versehen sind.

## Claims

1. Decoration for a garment, comprising individual elements (1) of glass or synthetic material, whose back is provided with an adhesive means (2) bounded by a flat adhesive surface (3), **characterized in that** each element (1) comprises a retroreflector (11) whose front is bounded by a transparent, convex, in particular spherical, incident surface (7) whereas the curved back (4) coated with reflecting material, extends essentially in the focal surface of incident light.

2. Decoration according to claim 1, **characterized in that** the height (H) of the element (1) perpendicular to the adhesive surface (3) is 1 to 5 mm, preferably 1 to 3 mm.

3. Decoration according to claim 1 or 2 with a round adhesive surface, **characterized in that** the diameter (D3) of the adhesive surface (3) is greater than the diameter (D7) of the incident surface (7).

4. Decoration according to one of claims 1 to 3, **characterized in that** the elements (1) comprise a collar (12) encompassing the retroflector (11).

5. Decoration according to claim 4, **characterized in that** the diameter (D3) of the adhesive surface (3) is greater than the height (H) of the element (1), and that the height (H) of the element (1) is greater than the diameter (D7) of the incident surface (7).

6. Decoration according to claim 4, **characterized in that** the collar (12) comprises obliquely inclined planar facets (6).

7. Decoration according to one of claims 1 to 6, **characterized in that** the back (4) of the retroflector (11) is metallized by vapour deposition.

8. Decoration according to one of claims 1 to 7, **characterized in that** the elements (1) are attached with their front surfaces to an adhesive film (8) which can be pulled off and are provided at their back sides with an adhesive means melting under the influence of pressure and heat.

## Revendications

1. Parure pour vêtement, constituée de différents éléments (1) de verre ou de matière plastique, dont la face arrière comporte un adhésif (2) limité par une surface adhésive planc (3), **caractérisée par le fait que** chaque élément (1) comporte un rétroreflecteur (11) dont la face avant est limitée par une surface d'entrée (7) transparente, convexe, en particulier sphérique, tandis que la face arrière (4) courbe, revêtue d'un matériau réfléchissant, se trouve sensiblement dans le plan focal de la lumière incidente.

2. Parure selon la revendication 1, **caractérisée par le fait que** la hauteur (H) de l'élément (1) perpendiculairement à la surface adhésive (3) vaut 1-5 mm, de préférence 1-3 mm.

3. Parure selon la revendication 1 ou 2, présentant une surface adhésive ronde, **caractérisée par le fait que** le diamètre (D) de la surface adhésive (3) est supérieur au diamètre (D7) de la surface d'entrée (7).

4. Parure selon l'une des revendications 1 à 3, **caractérisée par le fait que** les éléments (1) présentent une collerette (12) entourant le rétroréflecteur (11).

5. Parure selon la revendication 4, **caractérisée par le fait que** le diamètre (D3) de la surface adhèsive (3) est supérieur à la hauteur (H) de l'élément (1) et que la hauteur (H) de l'élément (1) est supérieure au diamètre (D7) de la surface d'entrée (7).

6. Parure selon la revendication 4, **caractérisée par le fait que** la collerette (12) présente des facettes planes (6) inclinées obliquement.

7. Parure selon l'une des revendications 1 à 6, **caractérisée par le fait que** la face arrière (4) du rétroréflecteur (11) est rendue réfléchissante par métallisation sous vide.

8. Parure selon l'une des revendications 1 à 7, **caractérisée par le fait que** les éléments (1) sont fixés, par leur face arrière, sur une feuille adhésive (8) que l'on peut en séparer et sont munis sur leur face arrière d'un adhésif (2) fondant sous l'influence de la pression et de la chalcur.
